# EUROPEAN PATENT APPLICATION

(11) **EP 4 593 047 A1**
(43) Date of publication of application: **30.07.2025**
(21) Application number: 24209764.0
(22) Date of filing: 30.10.2024
(51) Int. Cl.: H01G 4/012, H01G 4/12, H01G 4/232, H01G 4/30

(54) **MULTILAYER ELECTRONIC COMPONENT**

(30) Priority: 20.12.2023 KR 20230186891
(71) Applicant: Samsung Electro-Mechanics Co., Ltd., Suwon-si, Gyeonggi-do (KR)
(72) Inventor: Hwang, Jung Wun, Suwon-si, Gyeonggi-do (KR); Lee, Chae Dong, Suwon-si, Gyeonggi-do (KR); Park, Sun Kyoung, Suwon-si, Gyeonggi-do (KR); Oh, Ji Hye, Suwon-si, Gyeonggi-do (KR)
(74) Representative: Grünecker Patent- und Rechtsanwälte PartG mbB

(57) **Abstract**

A multilayer electronic component includes a body including a dielectric layer, and internal electrode layers disposed alternately in a first direction with the dielectric layer, and; first and second external electrodes disposed on the third and fourth surfaces, respectively, wherein internal electrode layer includes a main portion and an internal electrode extending from the main portion and connected to the external electrode through the lead portion, and a dummy electrode spaced apart from the internal electrode and connected to the external electrode, and a width of the lead portion may be smaller than a width of the main portion, at least a portion of the dummy electrode overlap the internal electrode in a length direction, and the dummy electrode may not overlap the internal electrode of another layer in a laminate direction.

## Description

### CROSS-REFERENCE TO RELATED APPLICATION(S)

This application claims benefit of priority to Korean Patent Application No. 10-2023-0186891 filed on December 20, 2023 in the Korean Intellectual Property Office, the disclosure of which is incorporated herein by reference in its entirety.

### BACKGROUND

### 1. FIELD

The present disclosure relates to a multilayer electronic component.

### 2. DESCRIPTION OF RELATED ART

A multilayer ceramic capacitor (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, charging or discharging electricity therein or therefrom.

Such a multilayer ceramic capacitor may be used as a component of various electronic devices since a multilayer ceramic capacitor may have a small size and high capacitance and may be easily mounted. As various electronic devices such as a computer and a mobile device have been designed to have a smaller size and higher output, demand for miniaturization and increased capacitance of multilayer ceramic capacitors has increased.

An internal electrode, a component of a multilayer ceramic capacitor, may be exposed to a body and may be covered by an external electrode and connected, and a portion in which an internal electrode and an external electrode are connected to each other may become a path for external moisture permeation and may be vulnerable to resistance reliability. Accordingly, a structure to improve weak resistance reliability by reducing an exposed area of the internal electrode may be applied, but a step difference defect with the dielectric layer may occur due to the reduced exposed area of the internal electrode.

Also, a body, another component of a multilayer ceramic capacitor, may mainly include a ceramic material, which is a brittle material, and may be vulnerable to tensile stress such that warpage stress may become vulnerable as much as the reduced region of the internal electrode and the body may not withstand stress applied from the outside depending on manufacturing processes or usage environments, such that cracks may occur in the body, which may reduce a lifespan.

### SUMMARY

An embodiment of the present disclosure is to provide a multilayer electronic component having improved resistance reliability.

An embodiment of the present disclosure is to provide a multilayer electronic component having improved warpage strength.

An embodiment of the present disclosure is to provide a multilayer electronic component having improved reliability.

According to an embodiment of the present disclosure, a multilayer electronic component includes a body including a dielectric layer, and internal electrode layers disposed alternately in a first direction with the dielectric layer, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; and first and second external electrodes disposed on the third and fourth surfaces, respectively. The internal electrode layer includes a first internal electrode layer and a second internal electrode layer. The first internal electrode layer includes a first internal electrode including a first main portion and a first lead portion extending from the first main portion, exposed to the third surface and connected to the first external electrode, and a first dummy electrode spaced apart from the first internal electrode, exposed to the third surface and connected to the first external electrode. The second internal electrode layer includes a first internal electrode including a second main portion and a second lead portion extending from the second main portion, exposed to the fourth surface and connected to the second external electrode, and a second dummy electrode spaced apart from the second internal electrode, exposed to the fourth surface and connected to the second external electrode. A size in the third direction of a portion of the first lead portion is smaller than a size in the third direction of the first main portion, and a size in the third direction of a portion of the second lead portion is smaller than a size in the third direction of the second main portion. The first dummy electrode does not overlap the second internal electrode in the first direction, and the second dummy electrode does not overlap the first internal electrode in the first direction. At least a portion of the first dummy electrode overlaps the first internal electrode in the second direction, and at least a portion of the second dummy electrode overlaps the second internal electrode in the second direction.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is an exploded perspective diagram illustrating a lamination structure of an internal electrode according to prior art;
FIGS. 3A and 3B are diagrams illustrating an internal electrode layer according to an embodiment of the present disclosure;
FIGS. 4A, 4B, 4C and 4D are diagrams illustrating an internal electrode layer according to an embodiment of the present disclosure;
FIGS. 5A and 5B are diagrams illustrating an internal electrode layer according to an embodiment of the present disclosure;
FIGS. 6A, 6B, 6C and 6D are diagrams illustrating an internal electrode layer according to an embodiment of the present disclosure;
FIG. 7 is a diagram illustrating the internal electrode layer in FIG. 5B; and
FIGS. 8A, 8B and 8C are diagrams illustrating one of internal electrode layers according to various embodiments of the present disclosure.

### DETAILED DESCRIPTION

Hereinafter, embodiments of the present disclosure will be described as below with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a lamination direction or a thickness (T) direction, the second direction may be defined as a length (L) direction, and the third direction may be defined as a width (W) direction.

### Multilayer Electronic Component

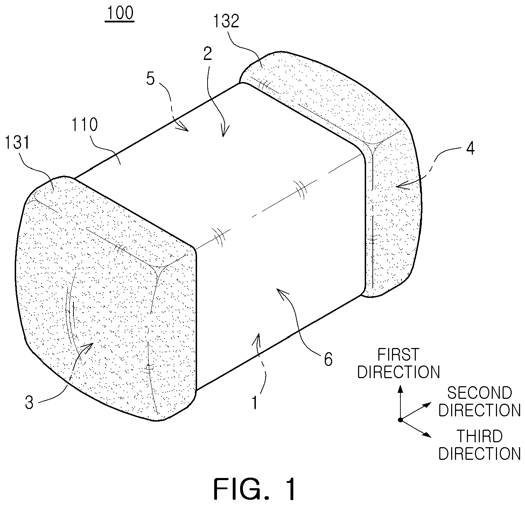

FIG. 1 is a perspective diagram illustrating a multilayer electronic component according to an embodiment.

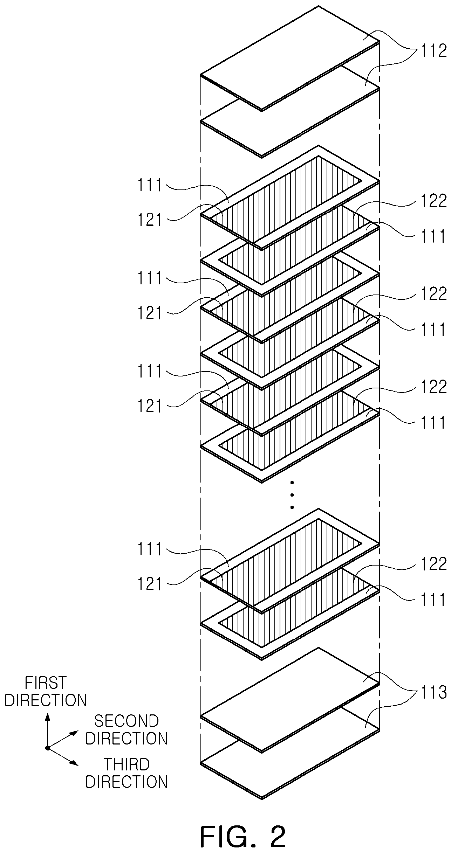

FIG. 2 is an exploded perspective diagram illustrating a lamination structure of an internal electrode according to prior art.

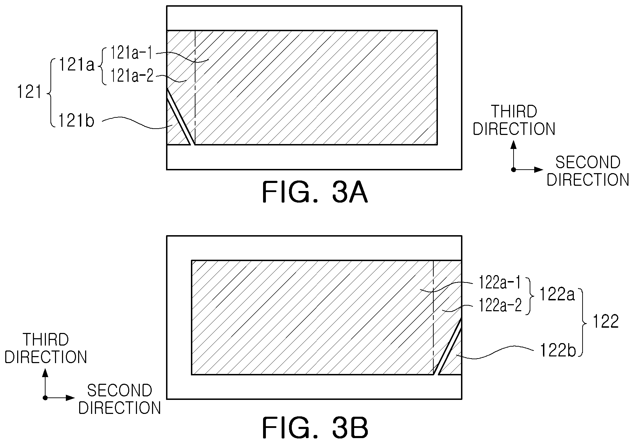

FIGS. 3A and 3B are diagrams illustrating an internal electrode layer according to an embodiment of the present disclosure.

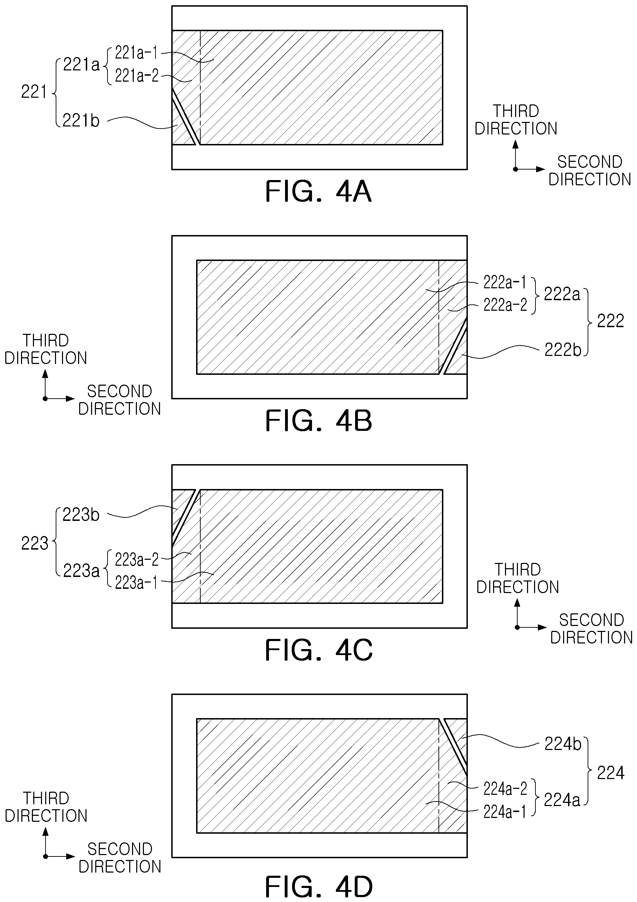

FIGS. 4A, 4B, 4C and 4D are diagrams illustrating an internal electrode layer according to an embodiment of the present disclosure.

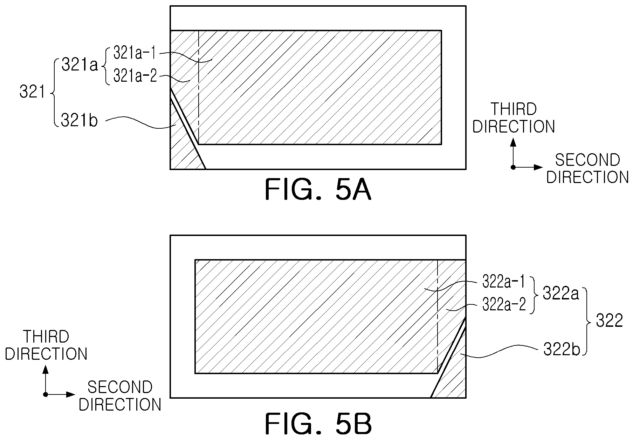

FIGS. 5A and 5B are diagrams illustrating an internal electrode layer according to an embodiment of the present disclosure.

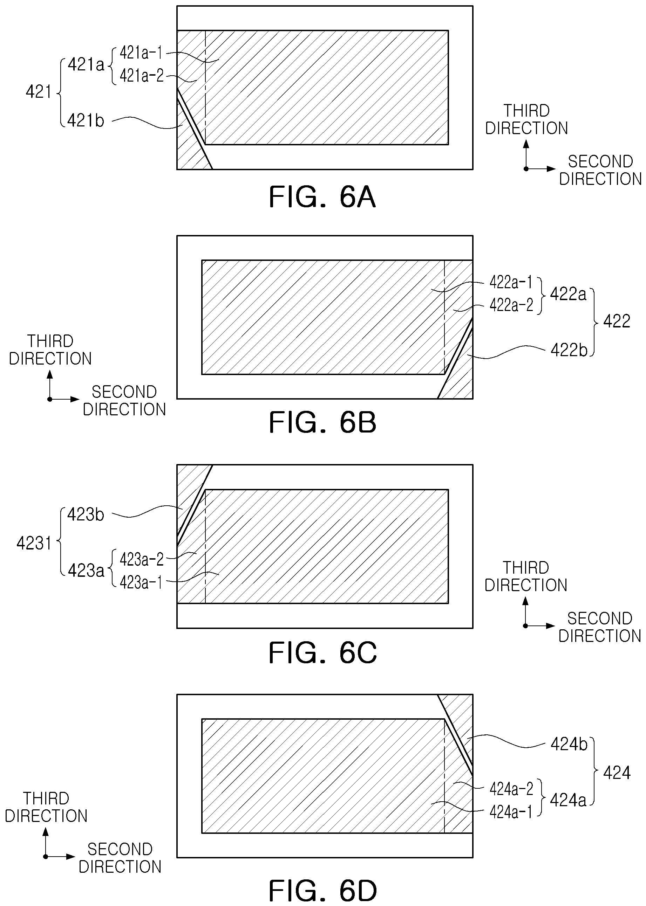

FIGS. 6A, 6B, 6C and 6D are diagrams illustrating an internal electrode layer according to an embodiment of the present disclosure.

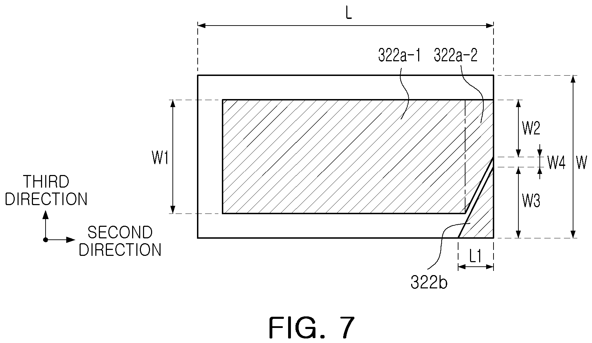

FIG. 7 is a diagram illustrating the internal electrode layer in FIG. 5B; and

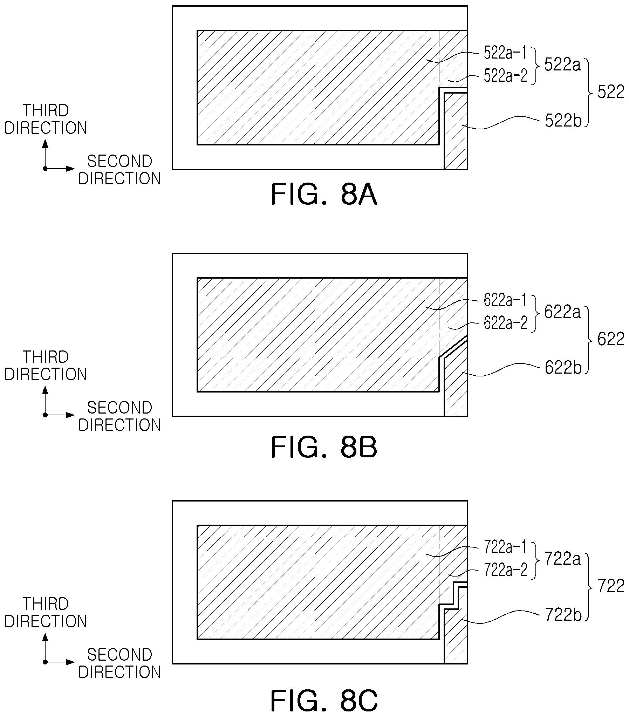

FIGS. 8A, 8B and 8C are diagrams illustrating one of internal electrode layers according to various embodiments of the present disclosure.

Hereinafter, a multilayer electronic component according to an embodiment will be described in greater detail with reference to FIGS. 1 to 8C. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

A multilayer electronic component 100 according to an embodiment may include a body including a dielectric layer 111, and internal electrode layers 121 and 122 disposed alternately in the dielectric layer 111 in the first direction, and including first and second surfaces 121 and 122 opposing each other in the first direction, third and fourth surfaces 3 and 4 connected to the first and second surfaces 1 and 2 and opposing each other in a second direction, and fifth and sixth surfaces 5 and 6 connected to the first to fourth surfaces 1, 2, 3, and 4 and opposing each other in a third direction; and first and second external electrodes disposed on the third and fourth surfaces 3 and 4, respectively. The internal electrode layers 121 and 122 may include a first internal electrode layer 121 and a second internal electrode layer 122. The first internal electrode layer 121 may include a first internal electrode 121a including a first main portion 121a-1 and a first lead portion 121a-2 extending from the first main portion 121a-1, exposed to the third surface 3 and connected to the first external electrode 131, and a first dummy electrode 121b spaced apart from the first internal electrode 121a, exposed to the third surface 3 and connected to the first external electrode 131. The second internal electrode layer 122 may include a second internal electrode 122a including a second main portion 122a-1 and a second lead portion 122a-1 extending from the second main portion 122a-1, exposed to the fourth surface 4 and connected to the second external electrode 132, and a second dummy electrode 122b spaced apart from the second internal electrode 122a, exposed to the fourth surface 4 and connected to the second external electrode 132. A size in the third direction of the first lead portion 121a-2 may be smaller than a size in the third direction of the first main portion 121a-1, and a size in the third direction of the second lead portion 122a-2 is smaller than a size in the third direction of the second main portion 122a-1. The first dummy electrode 121b may not overlap the second internal electrode 122a in the first direction, and the second dummy electrode 122b may not overlap the first internal electrode layer 121a in the first direction. At least a portion of the first dummy electrode 121b may overlap the first internal electrode layer 121a in the second direction, and at least a portion of the second dummy electrode 122b may overlap the second internal electrode layer 122a in the second direction.

In the body 110, the dielectric layers 111 and the internal electrode layers 121 and 122 may be alternately laminated.

More specifically, the body 110 may include a capacitance forming portion Ac disposed in the body 110 and forming capacitance including the first internal electrode 121 and the second internal electrode 122 alternately disposed to face each other with the dielectric layer 111 interposed therebetween. However, an embodiment thereof is not limited thereto, and the internal electrode layer may further include third and fourth internal electrode layers, which will be described in greater detail later.

The shape of the body 110 may not be limited to any particular shape, but as illustrated, the body 110 may have a hexahedral shape or a shape similar to a hexahedral shape. Due to reduction of ceramic powder included in the body 110 during a firing process, the body 110 may not have an exactly hexahedral shape formed by linear lines but may have a substantially hexahedral shape.

The body 110 may have the first and second surfaces 1 and 2 opposing each other in the first direction, the third and fourth surfaces 3 and 4 connected to the first and second surfaces 1 and 2 and opposing in the second direction, and the fifth and sixth surfaces 5 and 6 connected to the first to fourth surfaces 1, 2, 3, and 4 and opposing each other in the third direction.

The plurality of dielectric layers 111 forming the body 110 may be in a fired state, and a boundary boundaries between the adjacent dielectric layers 111 may be integrated with each other such that the boundaries may not be distinct without using a scanning electron microscope (SEM).

The raw material forming the dielectric layer 111 is not limited as long as sufficient capacitance may be obtained therewith, and generally, a perovskite (ABO₃) material may be used, and for example, a barium titanate material, a lead composite perovskite material, or a strontium titanate material may be used. A barium titanate material may include BaTiO₃ ceramic particles, and an example of the ceramic powder may include BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) in which Ca (calcium) and Zr (zirconium) are partially dissolved.

Also, as a raw material for forming the dielectric layer 111, various ceramic additives, organic solvents, binders, and dispersants may be added to particles such as barium titanate (BaTiO₃) depending on the purpose in the embodiment.

A thickness td of the dielectric layer 111 may not be limited to any particular example.

To ensure reliability of the multilayer electronic component 100 in a high voltage environment, the thickness of the dielectric layer 111 may be 10.0 um or less. Also, to implement miniaturization and high capacitance of the multilayer electronic component 100, the thickness of the dielectric layer 111 may be 3.0 um or less. To easily implement ultra-miniaturization and high capacitance, the thickness of the dielectric layer 111 may be 1.0 um or less, preferably 0.6 um or less, and more preferably 0.4 um or less.

Here, the thickness td of the dielectric layer 111 may refer to the thickness td of the dielectric layer 111 disposed between the first and second internal electrode layers 121 and 122.

The thickness td of the dielectric layer 111 may refer to the size, in the first direction, of the dielectric layer 111. Also, the thickness td of the dielectric layer 111 may refer to the average thickness td of the dielectric layer 111 and may refer to the average size, in the first direction, of the dielectric layer 111.

The average size, in the first direction, of the dielectric layer 111 may be measured by scanning a cross-section in the first and second directions of the body 110 using a scanning electron microscope (SEM) with a magnification of 10,000. More specifically, the average size, in the first direction, of the dielectric layer 111 may indicate the average value calculated by measuring the sizes, in the first direction, of the dielectric layer 111 at 10 points at an equal distance in the second direction in the scanned image. The 10 points at an equal distance may be specified in the capacitance formation portion Ac. Also, by extending the measurement of the average value to 10 dielectric layers 111, the average size, in the first direction, of the dielectric layer 111 may be further generalized.

The internal electrode layers 121 and 122 may be laminated alternately with the dielectric layer 111.

The internal electrode layers 121 and 122 may include internal electrodes 121a, 122a, and dummy electrodes 121b and 122b spaced apart from the internal electrodes 121a and 122a and not forming capacitance.

In embodiments, unless otherwise indicated, the description of the internal electrode layers 121 and 122 may correspond to the description of including the internal electrodes 121a and 122a and the dummy electrodes 121b and 122b.

The internal electrode layers 121 and 122 may include a first internal electrode layer 121 and a second internal electrode layer 122. However, an embodiment thereof is not limited thereto, and the internal electrode layer may further include third and fourth internal electrode layers, which will be described in greater detail later.

The internal electrode layers 121 and 122 may include internal electrodes 121a, 122a, and dummy electrodes 121b and 122b spaced apart from the internal electrodes 121a and 122a. More specifically, the first internal electrode layer 121 may include a first internal electrode layer 121a, and a first dummy electrode 121b spaced apart from the first internal electrode layer 121a, and the second internal electrode layer 122 may include a second internal electrode layer 122a, and a second dummy electrode 122b spaced apart from the second internal electrode layer 122a.

In other words, the internal electrodes 121a and 122a and the dummy electrodes 121b and 122b may be electrically insulated from each other. That is, the first internal electrode layer 121a may be electrically insulated from the first dummy electrode 121b, and the second internal electrode layer 122a may be electrically insulated from the second dummy electrode 122b.

More specifically, the first internal electrode layer 121 may be spaced apart from the fourth surface 4 and may be exposed through the third surface 3, and the second internal electrode layer 122 may be spaced apart from the third surface 3 and may be exposed through the fourth surface 4. In other words, the internal electrodes 121a and 122a and the dummy electrodes 121b and 122b may be exposed through at least the same surface of the body 110.

The internal electrodes 121a and 122a may include main portions 121a-1 and 122a-1 forming capacitance, and lead portions 121a-2 and 122a-2 not forming capacitance, extending from the main portions 121a-1 and 122a-1, exposed to one surface of the body 110 and connected to the external electrodes 131 and 132.

More specifically, the first internal electrode layer 121a may include a first main portion 121a-1 forming capacitance, and a first lead portion 121a-2 not forming capacitance and extending from the first main portion 121a-1, exposed to the third surface 3 and connected to the first external electrode 131. The second internal electrode layer 122a may include a second main portion 122a-1 forming capacitance, and a second lead portion 122a-2 not forming capacitance, extending from the second main portion 122a-1, exposed to the fourth surface 4 and connected to the second external electrode 132.

The lead portions 121a-2 and 122a-2 may be disposed adjacently to one of the fifth and sixth surfaces 5 and 6.

More specifically, the first lead portion 121a-2 may be disposed adjacently to the sixth surface 6, and the second lead portion 122a-2 may be disposed adjacently to the fifth surface 5. However, an embodiment thereof is not limited thereto, and the first and second lead portions 121a-2 and 122a-2 may be disposed adjacently to the fifth surface 5, and the first lead portion 121a-2 may be disposed adjacently to the sixth surface 6. The second lead portion 122a-2 may be disposed adjacently to the fifth surface 5, or vice versa.

Here, the configuration in which the lead portions 121a-2 and 122a-2 are disposed adjacently to one of the fifth and sixth surfaces 5 and 6 may indicate that centers of the lead portions 121a-2 and 122a-2 may be disposed closer to one of the fifth and sixth surfaces 5 and 6 than centers of the main portions 121a-1 and 122a-1 in the third direction, or in which centers of the lead portions 121a-2 and 122a-2 may be disposed closer to one of the fifth and sixth surfaces 5 and 6 than center of the dielectric layer 111 in the third direction, but an embodiment thereof is not limited thereto. "The center of the lead portion" may indicate the center in the third direction of the lead portions 121a-2 and 122a-2, and when it is difficult to clearly determine the center, the center may indicate the area center of the lead portions 121a-2 and 122a-2.

Here, the size in the second and third directions of the main portions 121a-1 and 122a-2 may be substantially constant.

More specifically, the size in the second direction of the first main portion 121a-1 may be substantially constant, the size in the third direction of the first main portion 121a-1 may be substantially constant, the size of the first main portion 121a-1 may be substantially constant, and the size of the first main portion 121a-1 in the second direction may be substantially constant, The size of 1 in the second direction may be substantially constant, and the size of the second main portion 122a-1 in the third direction may be substantially constant.

In embodiments, the configuration in which the size is substantially constant may indicate that the maximum size and the minimum size may have a value within 10% of the average value thereof, and where "size" may include the size in the first direction, size in the second direction, size in the third direction, thickness, length, or width of a component.

The size of the lead portions 121a-2 and 122a-2 in the third direction may be smaller than the size of the main portions 121a-1 and 122a-1 in the third direction.

In other words, the size in the third direction of the first lead portion 121a-2 may be smaller than the size in the third direction of the first main portion 121a-1, and the size in the third direction of the second lead portion 122a-2 may be smaller than the size in the third direction of the second main portion 122a-1.

For example, the lead portions 121a-2 and 122a-2 may include at least a portion having a size smaller than the size in the third direction of the main portions 121a-1 and 122a-1, the size in the third direction of the lead portions 121a-2 and 122a-2 may include at least a portion of a region having a size gradually decreasing in a direction away from the main portions 121a-1 and 122a-1, or may include at least a portion of the region having a size gradually increasing as in a direction away from at least one of the exposed third and fourth surfaces 3 and 4.

Accordingly, the lead portions 121a-2 and 122a-2 may be exposed to one of the third and fourth surfaces 3 and 4 in a position adjacently to one of the fifth and sixth surfaces 5 and 6.

More specifically, the first lead portion 121a-2 may be exposed through the third surface 3 in a position adjacently to the fifth surface 5, and the second lead portion 122a-2 may be exposed through the fourth surface 4 in a position adjacently to the sixth surface 6.

The dummy electrodes 121b and 122b may be spaced apart from one of the third and fourth surfaces 3 and 4 and may be exposed to another surface and connected to the external electrodes 131 and 132.

More specifically, the first dummy electrode 121b may be spaced apart from the fourth surface 4, exposed to the third surface 3 and connected to the first external electrode 131, and the second dummy electrode 122b may be spaced apart from the third surface 3, exposed to the fourth surface 4 and connected to the second external electrode 132.

In this case, at least a portion of the dummy electrodes 121b and 122b may overlap the internal electrodes 121a and 122a in the second direction.

More specifically, at least a portion of the first dummy electrode 121b may overlap the first internal electrode layer 121a in the second direction, and at least a portion of the second dummy electrode 122b may overlap the second internal electrode layer 122a in the second direction.

For example, in the dummy electrodes 121b and 122b, the size in the third direction of the lead portions 121a-2 and 122a-2 may be disposed in at least a portion of at least a portion region smaller than the size in the third direction of internal electrodes 121a-1 and 122a-2, such that at least a portion of the dummy electrodes 121b and 122b may overlap the internal electrodes 121a and 122a in the second direction, and more specifically, at least a portion of the dummy electrodes 121b and 122b may overlap the main portions 121a-1 and 122a-1 in the second direction.

As at least a portion of the dummy electrodes 121b and 122b overlaps the internal electrodes 121a and 122a in the second direction, the decrease in warpage strength of the lead portions 121a-2 and 122a-2 having a size reduced in the third direction may be compensated for, and the step difference may be reduced, such that mechanical strength of the multilayer electronic component 100 may be improved.

The dummy electrodes 121b and 122b may not overlap the internal electrodes 121a and 122a of the other internal electrode layers 121 and 122 in the first direction.

More specifically, the first dummy electrode 121b may not overlap the second internal electrode layer 122a in the first direction, and the second dummy electrode 122b may not overlap the first internal electrode layer 121a in the first direction. More specifically, the first dummy electrode 121b may not overlap the second main portion 122a-1 in the first direction, and the second dummy electrode 122b may not overlap the first main portion 121a-1 in the first direction.

Since the dummy electrodes 121b and 122b do not overlap the internal electrodes 121a and 122a of the other internal electrode layers 121 and 122 in the first direction, even when resistance reliability of the dummy electrodes 121b and 122b is deteriorated due to external moisture permeation, capacitance or reliability of the multilayer electronic component 100 may not be reduced.

That is, when the lead portions 121a-2 and 122a-2 are exposed to one of the third and fourth surfaces 3 and 4 in a position adjacently to one of the fifth and sixth surfaces 5 and 6, the dummy electrodes 121b and 122b may be exposed to one of the third and fourth surfaces 3 and 4 in a position adjacently to one of the sixth and fifth surfaces 6 and 5 in which the lead portions 121a-2 and 122a-2 are not disposed.

For example, the first lead portion 121a-2 may be exposed through the third surface 3 in a position adjacently to the fifth surface 5, and the first dummy electrode 121b may be exposed through the third surface 3 in a position adjacently to the sixth surface 6. The second lead portion 122a-2 may be exposed through the fourth surface 4 in a position adjacently to the fifth surface 5, and the second dummy electrode 122b may be exposed through the fourth surface 4 in a position adjacently to the sixth surface 6.

Each of the dummy electrodes 121b and 122b may be disposed in one of two opposing sides of a corresponding one of the lead portions 121a-2 and 122a-2 in the third direction.

More specifically, the first dummy electrode 121b may be disposed in one of the two opposing sides of the first lead portion 121a-2 in the third direction, and the second dummy electrode 122b may be disposed in one of the two opposing sides of the second lead portion 122a-2 in the third direction.

For example, when the first lead portion 121a-2 is disposed in a position adjacently to the fifth surface 5 and exposed through the third surface 3, the first dummy electrode 121b may be disposed in a position closer to the sixth surface 6 than the first lead portion 121a-2 and exposed through the third surface 3, and may not be disposed in a position closer to the fifth surface 5 than the first lead portion 121a-2.

The dummy electrodes 121b and 122b may be spaced apart from the internal electrodes 121a and 122a, and may include a region formed along the internal electrodes 121a and 122a.

Referring to FIGS. 3A and 3B as an example, it is indicated that, when the lead portions 121a-2 and 122a-2 extend from the main portions 121a-1 and 122a-1 and are exposed through at least one of the third and fourth surfaces 3 and 4, the size in the third direction of the lead portions 121a-2 and 122a-2 may gradually decrease, in a direction away from the main portions 121a-1 and 122a-1, and the size in the third direction gradually may increase in a direction away from at least one of the third and fourth surfaces 3 and 4. In this case, it is indicated that the size in the third direction of dummy electrodes 121b and 122b may gradually increase in a direction away from at least one of the third and fourth surfaces 3 and 4, and may include a region having a substantially constant spacing size and in which the dummy electrodes 121b and 122b are formed along the internal electrodes 121a and 122a.

As described above, by disposing the dummy electrodes 121b and 122b in the reduced region of the internal electrodes 121a and 122a, the reduced warpage strength of the region may be compensated for, and by reducing the step difference, mechanical properties of the multilayer electronic component 100 may be improved and reliability may be improved.

At least a portion of the distance at which the internal electrodes 121a, 122a and the dummy electrodes 121b and 122b are spaced apart from each other may have a substantially constant size, and preferably, the size of the distance at which the internal electrodes 121a and 122a and the dummy electrodes 121b and 122b are spaced apart from each other may be substantially constant.

As used herein, the expression "the size (being) substantially constant" may refer to the gap between the internal electrode and the dummy electrode being constant, as will be appreciated by those of skill in the art, and allows for approximations, inaccuracies and limits of measurement under the relevant circumstances. In one or more aspects, the terms "substantially," "about," and "approximately" may provide an industry-accepted tolerance for their corresponding terms and/or relativity between items, such as a tolerance of ± 1%, ± 5% , or ± 10% of the actual value stated, and other suitable tolerances.

The distance at which the internal electrodes 121a, 122a and the dummy electrodes 121b and 122b are spaced apart from each other may be in contact with at least one of the third and fourth surfaces 3 and 4, and the size of the region of the distance at which the internal electrodes 121a, 122a and the dummy electrodes 121b and 122b are spaced apart from each other, in contact with at least one of the third and fourth surfaces 3 and 4, may be 0.004 times or more and 0.15 times or less the size of the main portions 121a-1 and 122a-1 in the third direction. For example, when the average size in the third direction of the main portions 121a-1 and 122a-1 is defined as W1, and the size of the region of the distance at which the internal electrodes 121a and 122a and the dummy electrodes 121b and 122b are spaced apart from each other, in contact with at least one of the third and fourth surfaces 3 and 4, is defined as W4, 0.004×W1 ≤ W4 ≤ 0.15×W1 may be satisfied, which will be described in greater detail later.

In an embodiment, the dummy electrodes 321b and 322b may be further exposed to at least one of the fifth and sixth surfaces 5 and 6.

For example, the first dummy electrode 321b may be further exposed to the sixth surface 6, and the second dummy electrode 322b may be further exposed to the sixth surface 6. However, an embodiment thereof is not limited thereto, and the first dummy electrode may be further exposed to the fifth surface 5, the second dummy electrode may be further exposed to the fifth surface 5, and the first dummy electrode may be further exposed to the sixth surface 6. The second dummy electrode may be further exposed to the fifth surface 5, or the first dummy electrode may be further exposed to the fifth surface 5, and the second dummy electrode may be further exposed to the sixth surface 6.

In this case, the external electrodes 331 and 332 may be disposed to cover the exposed portions of the dummy electrodes 321b and 322b.

More specifically, when the first dummy electrode 321b is exposed to the third surface 3 and exposed to at least one of the fifth and sixth surfaces 5 and 6, the first external electrode 331 may be disposed on the third surface 3 and on at least one of the fifth and sixth surfaces 5 and 6 extending from the third surface 3, and may cover a portion at which the first dummy electrode 321b is exposed. When the second dummy electrode 322b is disposed on the fourth surface 4 and exposed to at least one of the fifth and sixth surfaces 5 and 6, the second external electrode 332 may be disposed on the fourth surface 4 and may be disposed on at least one of the fifth and sixth surfaces 5 and 6 extending from the fourth surface 4 and may cover the portion in which the second dummy electrode 322b is exposed.

Here, the configuration in which the external electrodes 331 and 332 cover the exposed portions of the dummy electrodes 321b and 322b may indicate that the external electrodes 331 and 332 may completely cover the dummy electrodes 321b and 322b exposed to one surface of the body 110, and that, when observed the multilayer electronic component 300 with the naked eye, the exposed portion of the dummy electrodes 321b and 322b may not be visible. However, an embodiment thereof is not limited thereto, and for example, when the length of the region in which the second dummy electrode 322b is exposed to the sixth surface 6 is defined as L1, the length of the second external electrode 332 disposed on the sixth surface 6 disposed to cover the second dummy electrode 322b exposed to the sixth surface 6 may be greater than L1, and may preferably be 1.05×L1 or more.

Since the external electrodes 331 and 332 are disposed to cover the exposed portions of the dummy electrodes 321b and 322b, external moisture permeate may be effectively prevented, and resistance reliability of the multilayer electronic component 300 may be improved.

The second internal electrode layer 322 according to an embodiment will be described in greater detail with reference to FIG. 7 as an example, but an embodiment thereof is not limited thereto, and the description of the second internal electrode layer may be applied to the component corresponding to the first internal electrode layer, and in the case in which the third and fourth internal electrode layers are included, the description may be applied to the components corresponding to the third and fourth internal electrode layers.

First, the average size of the body 110 in the second direction may be defined as L, and the average size of the body 110 in the third direction may be defined as W. Here, the average size of the body 310 in the second and third directions may correspond to the average size of the dielectric layer 311 in the second and third directions.

In this case, when the average size in the third direction of the second main portion 322a-1 is defined as W1, the average size W1 in the third direction of the second main portion may satisfy 0.4×W≤W1≤0.95×W. By having the above-mentioned size, sufficient capacitance may be implemented, and deterioration of reliability by external moisture permeate or external stress may not occur.

When the size in the third direction of the region exposed to the fourth surface 4 of the second lead portion 322a-2 is defined as W2, the size W2 in the third direction of the second lead portion 322a-2 exposed to the fourth surface 4 may satisfy 0.5×W1≤W2≤0.76×W. By having the above-mentioned size, sufficient electrical connectivity with the external electrode 332 may be assured and deterioration of reliability due to warpage stress may not be occur.

When the size in the third direction of the region exposed to the fourth surface 4 of the second dummy electrode 322b is defined as W3, the size of the second dummy electrode 322b exposed to the fourth surface 4 in the third direction W3 may satisfy 0.28×W≤W3≤0.5×W. By having the above-mentioned size, mechanical properties may not be deteriorated due to warpage stress, such that cracks or delamination may be less likely to occur.

In this case, when the second dummy electrode 322b is exposed to the sixth surface 6, and the size of the region exposed to the sixth surface 6 in the second direction is defined as L1, the size in the second direction of the second external electrode 332 disposed on the sixth surface 6 may be L1 or more, and preferably may be 1.05×L1 or more. In other words, the second external electrode 332 is disposed to completely cover the second dummy electrode 322b exposed to the sixth surface 6, the path for external moisture permeation may be suppressed, the step difference may be compensated for, and warpage stress may be improved.

The distance at which the second internal electrode 322a and the second dummy electrode 322b are spaced apart from each other may be substantially constant, and the size of this distance may be defined as the distance between the region in which the second lead portion 322a-2 is exposed to the fourth surface 4 and the region in which the second dummy electrode 322b is exposed to the fourth surface 4, when the size of the distance from fourth surface 4 is defined as W4, 0.004×W1≤W4≤0.15×W1 may be satisfied. By having the above-mentioned size, electrical insulation may be implemented between the internal electrode 322a and the dummy electrode 322b, and warpage stress may be improved.

The body 110 may be formed by alternately laminating ceramic green sheets on which the first internal electrode layer 121 are printed and ceramic green sheets on which the second internal electrode layer 122 are printed, and firing the sheets.

The material for forming the internal electrode layers 121 and 122 is not limited to any particular example, and a material having excellent electrical conductivity may be used. For example, the internal electrode layers 121 and 122 may include one or more of nickel (Ni), copper (Cu), palladium (Pd), silver (Ag), gold (Au), platinum (Pt), tin (Sn), tungsten (W), titanium (Ti), and alloys thereof.

Also, the internal electrode layers 121 and 122 may be formed by printing conductive paste for internal electrodes including one or more of nickel (Ni), copper (Cu), palladium (Pd), silver (Ag), gold (Au), platinum (Pt), tin (Sn), tungsten (W), titanium (Ti), and alloys thereof on a ceramic green sheet. A screen-printing method or a gravure printing method may be used as a method of printing the conductive paste for internal electrodes, but an embodiment thereof is not limited thereto.

The thickness of the internal electrode layers 121 and 122 may not be limited to any particular example.

To ensure reliability of the multilayer electronic component 100 in a high voltage environment, the thickness of the internal electrode layers 121 and 122 may be 3.0 um or less. Also, to implement miniaturization and high capacitance of the multilayer electronic component 100, the thickness of the internal electrodes 121 and 122 may be 1.0 um or less. To easily implement ultra-miniaturization and high capacitance, the thickness of the internal electrodes 121 and 122 may be 0.6 um or less, and more preferably 0.4 um or less.

Also, the thickness of the internal electrode layers 121 and 122 may indicate the size in the first direction of the internal electrode layers 121 and 122. Also, the thickness of internal electrode layers 121 and 122 may indicate the average thickness of the internal electrode layers 121 and 122, and may indicate the average size in the first direction of the internal electrode layers 121 and 122.

The average size, in the first direction, of the internal electrode layers 121 and 122 may be measured by scanning a cross-section of the body 110 using a scanning electron microscope (SEM) with a magnification of 10,000X. More specifically, an average value may be measured from the sizes, in the first direction, of the internal electrode at 10 points at an equal distance in the second direction in the scanned image. The 10 points at an equal distance may be designated in the capacitance formation portion Ac. Also, by extending the measurement of the average value to 10 internal electrodes, the average size of the internal electrode layers 121 and 122 may be further generalized.

In an embodiment, at least one average thickness of the plurality of dielectric layers 111 and at least one average thickness of the plurality of internal electrode layers 121 and 122 may satisfy 2×te < td.

In other words, the average thickness of the dielectric layer 111 may be greater than twice the average thickness of one internal electrode layer 121 and 122. Preferably, the average thickness of the plurality of dielectric layers 111 may be greater than twice the average thickness of the plurality of internal electrode layers 121 and 122.

Generally, as for a high-voltage electronic component, a major issue may be reliability due to a decrease in insulation breakdown voltage (BDV) in a high-voltage environment.

Accordingly, to prevent a decrease in the insulation breakdown voltage in a high voltage environment, by increasing the average thickness of dielectric layer 111 twice the average thickness of the internal electrode layers 121 and 122, the thickness of the dielectric layer, which is the distance between the internal electrode layers, may be increased, and insulation breakdown voltage properties may be improved.

When the average thickness of the dielectric layer 111 is less than twice the average thickness of the internal electrode layers 121 and 122, the average thickness of the dielectric layer, which is the distance between the internal electrode layers, may be thin, and insulation breakdown voltage may decrease, and shorts may occur between the internal electrode layers.

The body 110 may include cover portions 112 and 113 disposed on both end-surfaces of the capacitance forming portion Ac in the first direction.

Specifically, the body 110 may include a first cover portion 112 disposed on one surface in the first direction of the capacitance formation portion Ac and a second cover portion 113 disposed on the other surface in the first direction of the capacitance formation portion Ac. More specifically, the body 110 may include the upper cover portion 112 disposed in the upper portion in the first direction of the capacitance formation portion Ac and the lower cover portions 113 disposed in the lower portion in the first direction of the capacitance formation portion Ac.

The upper cover portion 112 and the lower cover portion 113 may be formed by laminating a single dielectric layer 111 or two or more dielectric layers 111 on the upper and lower surfaces of the capacitance forming portion Ac in the first direction, and may prevent damages to the internal electrode layers 121 and 122 due to physical or chemical stress.

The upper cover portion 112 and the lower cover portion 113 may not include the internal electrode layers 121 and 122 and may include the same material as that of the dielectric layer 111. That is, the upper cover portion 112 and the lower cover portion 113 may include a ceramic material, for example, a barium titanate (BaTiO₃) ceramic material.

The thickness of the cover portion 112 and 113 may not be limited to any particular example.

However, to easily implement miniaturization and high capacitance of multilayer electronic component, the thickness of the cover portions 112 and 113 may be 100 um or less, preferably 30 um or less. More preferably, the thickness may be 20 um or less in an ultra-small product.

Here, the thickness of the cover portion 112 or 113 may refer to the size, in the first direction, of the cover portion 112 or 113. Also, the thickness of the cover portions 112 and 113 may refer to the average thickness of the cover portions 112 and 113, and may refer to the average size, in the first direction, of the cover portions 112 and 113.

The average size of the cover portions 112 and 113 may be measured by scanning a cross-section in the first and second directions of the body 110 using a scanning electron microscope (SEM) at a magnification of 10,000. More specifically, the average size may indicate the average value calculated by measuring the sizes, in the first direction, at 10 points at an equal distance in the second direction in the scanned image of the cover portion.

Also, the average size, in the first direction, of the cover portion measured by the above method may be substantially the same as the average size, in the first direction, of the cover portion in the cross-section in the first and third directions of the body 110.

In an embodiment, the ceramic electronic component 100 may have two external electrodes 131 and 132, but the number of the external electrodes 131 and 132 or the shape thereof may be varied depending on the forms of the internal electrode 121 and 122 or other purposes.

The external electrodes 131 and 132 may be disposed on the body 110 and may be connected to the internal electrode layers 121 and 122.

More specifically, the external electrodes 131 and 132 may be disposed on the third and fourth surfaces 3 and 4 of the body 110, respectively, and may include first and second external electrodes 131 and 132 connected to the first and second internal electrode layers 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

The first external electrode 131 may be connected to the first internal electrode layer 121a, and the first dummy electrode 121b exposed to the third surface 3 through the first lead portion 121a-2 disposed on the third surface 3 and exposed to the third surface 3, and the second external electrode 122b may be connected to the second internal electrode layer 122a, and the second dummy electrode 122b exposed to the fourth surface 4 through the second lead portion 122a-2 disposed on the fourth surface 4 and exposed to the fourth surface 4.

Also, the external electrodes 131 and 132 may extend to portions of the first and second surfaces 1 and 2 of the body 110, or may extend to portions of the fifth and sixth surfaces 5 and 6 of the body 110. That is, the first external electrode 131 may be disposed on a portion of the first, second, fifth, and sixth surfaces 1, 2, 5, and 6 of the body 110, and the second external electrode 132 may be disposed on a portion of the first, second, fifth, and sixth surfaces 1, 2, 5, and 6 of the body 110, and on the third surface 3 of the body 110.

In this case, when the dummy electrodes 321b and 322b are exposed to at least one of the fifth and sixth surfaces 5 and 6, the first and second external electrodes 331 and 332 may cover the dummy electrodes 321b and 322b exposed by at least one of the fifth and sixth surfaces 5 and 6.

The external electrodes 131 and 132 may be formed of any material having electrical conductivity, such as metal, and a specific material may be determined in consideration of electrical properties and structural stability, and the external electrodes 131 and 132 may have a multilayer structure.

For example, the external electrodes 131 and 132 may include electrode layers disposed on the body 110 and plating layers disposed on the electrode layer.

For a more specific example of the electrode layer, the electrode layer may include a first electrode layer, which is a fired electrode including a first conductive metal and glass, or a second electrode layer, which is a resin-based electrode including a second conductive metal and resin.

Here, the conductive metal included in the first electrode layer may be referred to as a first conductive metal, and the conductive metal included in the second electrode layer may be referred to as a second conductive metal. In this case, the first conductive metal and the second conductive metal may be the same or different from each other, and when a plurality of conductive metals are included, only a portion thereof may include the same conductive metal, but an embodiment thereof is not limited thereto.

The electrode layer may be formed by forming a fired electrode and a resin-based electrode in order on the body 110.

The electrode layer may be formed by transferring a sheet including a conductive metal to the body 110, or by transferring a sheet including a conductive metal to the fired electrode.

As the conductive metal included in the electrode layer, a material having excellent electrical conductivity may be used, and the conductive metal may include, for example, one or more selected from a group consisting of nickel (Ni), copper (Cu), palladium (Pd), silver (Ag), gold (Au), platinum (Pt), tin (Sn), tungsten (W), titanium (Ti) and alloys thereof, but an embodiment thereof is not limited thereto.

In an embodiment, the electrode layers 131a and 132a, 131b, and 132b may have a two-layer structure including the first electrode layer and the second electrode layer, and accordingly, the external electrodes 131 and 132 may include first electrode layer including a first conductive metal and glass, and second electrode layer disposed on the first electrode layer and including a second conductive metal and resin.

The first electrode layer may improve bondability with the body 110 by including glass, and the second electrode layer may improve warpage strength by including resin.

The first conductive metal included in the first electrode layer is not limited to any particular example as long as the material may be electrically connected to the internal electrode layers 121 and 122 to form capacitance, and for example, the first conductive metal may include one or more selected from a group consisting of nickel (Ni), copper (Cu), palladium (Pd), silver (Ag), gold (Au), platinum (Pt), tin (Sn), tungsten (W), titanium (Ti) and alloys thereof.

The first electrode layer may be formed by applying a conductive paste prepared by adding glass frit to the first conductive metal particles and firing the paste.

The second conductive metal included in the second electrode layer may allow the layers to be electrically connected to the first electrode layer.

The conductive metal included in the second electrode layer is not limited to any particular example as long as the material may be electrically connected to the electrode layers 131a and 132a, and may include one or more selected from a group consisting of nickel (Ni), copper (Cu), palladium (Pd), silver (Ag), gold (Au), platinum (Pt), tin (Sn), tungsten (W), titanium (Ti) and alloys thereof.

The second conductive metal included in the second electrode layer may include one or more of spherical particles and flake-type particles. In other words, the conductive metal may only include flake-type particles, only spherical particles, or may be a mixture of flake-type particles and spherical particles. Here, spherical particles may include shapes not completely spherical, for example, shapes in which the length ratio (major axis/minor axis) between the major axis and the minor axis is 1.45 or higher. Flake-type particles may refer to particles having a flat and elongated shape, and are not limited to any particular example, and for example, a length ratio of the major axis between the minor axis (major axis/minor axis) may be 1.95 or more. The length of the major axis and the minor axis of the spherical particles and the flake-type particles may be measured from an image obtained by scanning the cross-sections in first and second direction of the central portion in the third direction of the multilayer electronic component using a scanning electron microscope (SEM).

The resin included in the second electrode layer may assure adhesion and may absorb impacts. The resin included in the second electrode layer is not limited to any particular example as long as the material has adhesion and impact absorption properties and is able to be mixed with second conductive metal particles to prepare paste, and may include, for example, epoxy resin.

Also, the second electrode layer may include a plurality of second conductive metal particles, an intermetallic compound, and resin. By including an intermetallic compound, electrical connectivity with the first electrode layer may be improved. The intermetallic compound improve electrical connectivity by connecting the plurality of metal particles, and may surround the plurality of metal particles and may connect the particles to each other.

In this case, the intermetallic compound may include a metal having a melting point lower than a curing temperature of resin. That is, as the intermetallic compound may include a metal having a melting point lower than the curing temperature of resin, the metal having a melting point lower than the curing temperature of the resin may melt during a drying and curing process, may form an intermetallic compound with a portion of the metal particles and may surround the metal particles. In this case, the intermetallic compound may include a low melting point metal, preferably below 300°C.

For example, Sn having a melting point of 213-220°C may be included. During the drying and hardening process, Sn may be melted, and the melted Sn may wet metal particles at high melting points such as Ag, Ni, or Cu by capillary action, may react with a portion of Ag, Ni or Cu metal particles and may form intermetallic compounds such as Ag₃Sn, Ni₃Sn₄, Cu₆Sn₅, or Cu₃Sn. Ag, Ni or Cu not participating in the reaction may remain in the form of metal particles.

Accordingly, the plurality of metal particles may include one or more of Ag, Ni and Cu, and the intermetallic compound may include one or more of Ag₃Sn, Ni₃Sn₄, Cu₆Sn₅ and Cu₃Sn.

The plating layers may improve mounting properties.

The types of plating layers are not limited to any particular example, and may be plating layers including one or more of nickel (Ni), tin (Sn), silver (Ag), palladium (Pd) and alloys thereof, or a plurality of plating layers may be formed.

For a more specific example of the plating layers, the plating layers may be Ni plating layers or Sn plating layers, and the Ni plating layers and the Sn plating layers may be formed in order on the electrode layer, and the Sn plating layers, Ni plating layers and Sn plating layers may be formed in order. Also, the plating layers may include a plurality of Ni plating layers and/or a plurality of Sn plating layers.

The size of the multilayer electronic component 100 may not be limited to any particular example.

However, to implement both miniaturization and high capacitance, the number of laminates may need to be increased by reducing the thickness of the dielectric layer and the internal electrode, such that the effect described in the embodiments may be noticeable in the multilayer electronic component 100 having a 3216 (length × width: 3.2mm × 1.6mm) size or less.

Hereinafter, the embodiments will be described in greater detail, but it is help understanding of the present disclosure and the scope of the present disclosure is not limited thereto.

### <First embodiment>

The multilayer electronic component 100 according to the first embodiment will be described in greater detail with reference to FIGS. 1 and 3. The multilayer electronic component 100 according to the first embodiment may include a body including a dielectric layer 111, and internal electrode layers 121 and 122 disposed alternately in the dielectric layer 111 in the first direction, and including first and second surfaces 121 and 122 opposing each other in the first direction, third and fourth surfaces 3 and 4 connected to the first and second surfaces 1 and 2 and opposing each other in a second direction, and fifth and sixth surfaces 5 and 6 connected to the first to fourth surfaces 1, 2, 3, and 4 and opposing each other in a third direction; and first and second external electrodes disposed on the third and fourth surfaces 3 and 4, respectively. The internal electrode layers 121 and 122 may include a first internal electrode layer 121 and a second internal electrode layer 122. The first internal electrode layer 121 may include a first internal electrode 121a including a first main portion 121a-1 and a first lead portion 121a-2 extending from the first main portion 121a-1, exposed to the third surface 3 and connected to the first external electrode 131, and a first dummy electrode 121b spaced apart from the first internal electrode 121a, exposed to the third surface 3 and connected to the first external electrode 131. The second internal electrode layer 122 may include a second internal electrode 122a including a second main portion 122a-1 and a second lead portion 122a-1 extending from the second main portion 122a-1, exposed to the fourth surface 4 and connected to the second external electrode 132, and a second dummy electrode 122b spaced apart from the second internal electrode 122a, exposed to the fourth surface 4 and connected to the second external electrode 132. A size in the third direction of the first lead portion 121a-2 may be smaller than a size in the third direction of the first main portion 121a-1, and a size in the third direction of the second lead portion 122a-2 is smaller than a size in the third direction of the second main portion 122a-1. The first dummy electrode 121b may not overlap the second internal electrode 122a in the first direction, and the second dummy electrode 122b may not overlap the first internal electrode layer 121a in the first direction. At least a portion of the first dummy electrode 121b may overlap the first internal electrode layer 121a in the second direction, and at least a portion of the second dummy electrode 122b may overlap the second internal electrode layer 122a in the second direction.

Also, the first lead portion 121a-2 may be disposed adjacently to the fifth surface 5, and the second lead portion 122a-2 may be disposed adjacently to the fifth surface 5.

Also, the first dummy electrode 121b may be disposed closer to the sixth surface 6 than the first lead portion 121a-2, and the second dummy electrode 122b may be disposed closer to the sixth surface 6 than the second lead portion 122a-2.

Also, the sizes in the second and third directions of the first and second main portions 121a-1 and 122a-1 may be substantially constant.

Also, the sizes in the third direction of the exposed portions of the first and second lead portions 121a-2 and 122a-2 may be smaller than the average sizes in the third direction of the first and second main portions 121a-1,122a-1, respectively.

Also, at least a portion of the distances at which the first and second internal electrodes 121a and 122a and the first and second dummy electrodes 121b and 122b are spaced apart from each other, respectively, may have a substantially constant size.

The description of the multilayer electronic component 100 according to the first embodiment may be the same as the above descriptions otherwise indicated.

### <Modified example of first embodiment>

Hereinafter, the multilayer electronic component 300 according to a modified example of the first embodiment will be described with reference to FIG. 5. The description of the same components as the descriptions of those of the multilayer electronic component 100 according to the first embodiment will not be provided, and it is obvious that a person skilled in the art may easily understand the omitted description.

In the multilayer electronic component 300 according to a modified example of the first embodiment, the first dummy electrode 321b may be further exposed to the sixth surface 6, may be connected to the first external electrode 331, and may be covered by the first external electrode 331, and the second dummy electrode 322b may be further exposed as the sixth surface 6, may be connected to the second external electrode 332, and may be covered by the second external electrode 332.

In the multilayer electronic component 300 in the embodiment, as the dummy electrodes 321b and 322b extend in the third direction to be more exposed to the sixth surface 6, warpage strength of the multilayer electronic component 300 may be improved.

Also, the external electrodes 331 and 341 cover the exposed dummy electrodes 321b and 322b, resistance reliability may be improved.

### <Second embodiment>

Hereinafter, the multilayer electronic component 200 according to the second embodiment will be described with reference to FIG. 4. Meanwhile, the description of the same components as the descriptions of those of the multilayer electronic component 100 according to the first embodiment will not be provided, and it is obvious that a person skilled in the art may easily understand the omitted description.

In the multilayer electronic component 200 according to the second embodiment, the internal electrode layers 221, 222, 223, and 224 may further include a third internal electrode layer 223 and a third lead portion 223a-2 extending from the third main portion 223a-1 and exposed to the third surface 3 and connected to the first external electrode 231, and a third dummy electrode 223b spaced apart from the third internal electrode 223a and exposed to the third surface 3 and connected to the first external electrode 231, the fourth internal electrode layer 224 may include a fourth internal electrode 224a including a fourth main portion 224a-1 and a fourth lead portion 224a-2 extending from the fourth main portion 224a-1 and exposed to the fourth surface 4 and connected to the second external electrode 232, and a fourth dummy electrode 224b spaced apart from the fourth internal electrode 224a-1 and exposed to the fourth surface 4 and connected to the second external electrode 232. The size in the third direction of the third lead portion 223a-2 may be smaller than the size in the third direction of the third main portion 223a-1, the size in the third direction of the fourth lead portion 224a-2 may be smaller than the size in the third direction of the fourth main portion 224a-1, the third dummy electrode 223b may not overlap the fourth internal electrode 224a in the first direction, and the fourth dummy electrode 224b may not overlap the third internal electrode 223a in the first direction, at least a portion of the third dummy electrode 223b may overlap the third internal electrode 223a in the second direction, and at least a portion of the fourth dummy electrode 224b may overlap the fourth internal electrode 224a in the second direction, the first lead portion 221a-2 may be disposed closer to the fifth surface 5 than the third lead portion 223a-2, and the second lead portion 222a-2 may be disposed closer to the fifth surface 5 than the fourth lead portion 224a-2.

In this case, the first internal electrode layer 221 and the third internal electrode layer 223 may be symmetrical in the third direction with respect to the second direction axis, and the second internal electrode layer 222 and the fourth internal electrode layer 224 may be symmetrical in the third direction with respect to the second direction axis.

Here, the configuration in which the components are symmetrical in the third direction with respect to the axis in the second direction may indicate that, with respect to the center in the third direction, the components are symmetrical in the third direction with respect to the axis in the second direction, and also that the components are symmetrical in the third direction with respect to the axis in the second direction in one point in the third direction.

Also, the first lead portion 221a-2 may be disposed adjacently to the fifth surface 5, the second lead portion 222a-2 may be disposed adjacently to the fifth surface 5, the third lead portion 223a-2 may be disposed adjacently to the sixth surface 6, and the fourth lead portion 224a-2 may be disposed adjacently to the sixth surface 6.

The first dummy electrode 221b may be disposed closer to the sixth surface 6 than the first lead portion 221a-2, the second dummy electrode 222b may be disposed closer to the sixth surface 6 than the second lead portion 222a-2, and the third dummy electrode 223b may be disposed closer to the fifth surface 5 than the third lead portion 223a-2, and the fourth dummy electrode 224b may be disposed closer to the fifth surface 5 than the fourth lead portion 224a-2.

Similarly, the sizes in the second and third directions of the third and fourth main portions 223a-1 and 224a-1 may be substantially constant.

Also, the sizes in the third direction of the exposed portions of the third and fourth lead portions 223a-2 and 224a-2 may be smaller than the sizes in the third direction of the third and fourth main portions 223a-1 and 224a-1, respectively.

Also, at least a portion of the distances at which the third and fourth internal electrodes 223a and 224a and the third and fourth dummy electrodes 223b and 224b are spaced apart from each other may have a substantially constant size, respectively.

### <Modified example of second embodiment>

Hereinafter, a multilayer electronic component 400 according to a modified example of the second embodiment will be described with reference to FIG. 6. Meanwhile, the description of the same components as the descriptions of those of the multilayer electronic component 300 according to the first embodiment and the description of the same components as the descriptions of those of the multilayer electronic component 200 according to the second embodiment will not be provided, and it is obvious that a person skilled in the art may easily understand the omitted description.

In the multilayer electronic component 400 according to a modified example of the second embodiment, the third dummy electrode 423b may be further exposed to the fifth surface 5, may be connected to the first external electrode 431, and may be covered by the first external electrode 431, and the fourth dummy electrode 424b may be further exposed to the fifth surface 56, may be connected to the second external electrode 432, and may be covered by the second external electrode 332.

In the multilayer electronic component 400 in the embodiment, the third and fourth dummy electrodes 423b and 424b may extend in the third direction to be further exposed to at least one surface of the fifth and sixth surfaces 5 and 6, warpage strength of the multilayer electronic component 400 may be improved.

Also, as the external electrodes 431 and 441 cover the exposed third and fourth dummy electrodes 423b and 424b, resistance reliability may be improved.

### <Various modified examples of first and second embodiment>

Hereinafter, multilayer electronic components 500, 600, and 700 according to the first and second embodiment or a modified example of the first and second embodiment will be described. Meanwhile, the description of the same components as the descriptions of those of the multilayer electronic components 100, 200, 300, and 400 according to the first embodiment will not be provided, and it is obvious that a person skilled in the art may easily understand the omitted description.

The second internal electrode layers 522, 622, and 722 will be described as below.

First, the size of the second lead portion 522a-2 in the third direction may be smaller than the size in the third direction of the second main portion 522a-1. In this case, the sizes in the second and third directions of the first lead portion 522a-2 may be substantially constant. The distance at which the second dummy electrode 522b and the second internal electrode 522a are spaced apart from may be substantially constant. Accordingly, the sizes in the second and third directions of the second dummy electrode 522b may be substantially constant.

As another modified example, the size in the third direction of the second lead portion 622a-2 may gradually decrease in a direction away from the second main portion 622a-1. However, in the region in which the second main portion 622a-1 and the second lead portion 622a-2 are in contact with each other, the size in the third direction of the second main portion 622a-1 may be larger than the size in the third direction of the second lead portion 622a-2. Accordingly, the second lead portion 622a-2 may include an inclined region, or may include an inclined side. Here, the configuration in which the portion is inclined may indicate that the portion is not substantially parallel to the third to sixth surfaces. The distance at which the second dummy electrode 622b and the second internal electrode 622a are spaced apart from may be substantially constant. Accordingly, the size in the third direction of the second dummy electrode 622b may gradually decrease in a direction away from the fourth surface 4.

As another modified example, the size in the third direction of the second lead portion 722a-2 may be smaller than the size in the third direction of the second main portion 722a-1. In this case, the second lead portion 722a-2 may include a first region constant and smaller than the size in the third direction of the second main portion 722a-1, and a second region constant and smaller than the size in the third direction of the first region. In other words, the second lead portion 722a-2 may have a staircase shape, the size thereof in the third direction may be decreased. The distance at which the second dummy electrode 722b and the second internal electrode 722a are spaced apart from each other may be substantially constant. Accordingly, the second dummy electrode 722b may have a staircase shape. The second lead portion 722a-2 may have two stepped portions from a side edge of the second main portions 722a-1 with reduced sizes in the third direction. The second dummy electrode 722b may have two stepped portions matching the two stepped portions of the second lead portion 722a-2 with increased sizes in the third direction.

This modified example is described using the second internal electrode layer as an example, and the description may be applied the shapes of the first internal electrode layer, or the third internal electrode layer and the fourth internal electrode layer.

According to the aforementioned embodiments, the multilayer electronic component may have improved resistance reliability.

Also, the multilayer electronic component may have improved warpage strength.

Also, the multilayer electronic component may have improved reliability.

The embodiments do not necessarily limit the scope in the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as relevant to the other embodiment unless otherwise indicated.

Terms used in the present specification are for explaining the embodiments rather than limiting the embodiments. Unless explicitly described to the contrary, a singular form may include a plural form in the present specification

While the embodiments have been illustrated and described above, it will be configured as apparent to those skilled in the art that modifications and variations could be made without departing from the scope of the present disclosure as defined by the appended claims.

## Claims

1. A multilayer electronic component (100), comprising:
a body (110) including a dielectric layer (111), and internal electrode layers (121, 122) disposed alternately in a first direction with the dielectric layer (111), and including first and second surfaces (1, 2) opposing each other in the first direction, third and fourth surfaces (3, 4) connected to the first and second surfaces and opposing each other in a second direction, and fifth and sixth surfaces (5, 6) connected to the first to fourth surfaces and opposing each other in a third direction; and
first and second external electrodes (131, 132) disposed on the third and fourth surfaces (3, 4), respectively,
wherein the internal electrode layer (121, 122) includes a first internal electrode layer (121) and a second internal electrode layer (122),
wherein the first internal electrode layer (121) includes a first internal electrode (121a) including a first main portion (121a-1) and a first lead portion (121a-2) extending from the first main portion (121a-1), exposed to the third surface (3) and connected to the first external electrode (131), and a first dummy electrode (121b) spaced apart from the first internal electrode (121a), exposed to the third surface (3) and connected to the first external electrode (131),
wherein the second internal electrode layer (122) includes a first internal electrode (122a) including a second main portion (122a-1) and a second lead portion (122a-2) extending from the second main portion (122a-1), exposed to the fourth surface (4) and connected to the second external electrode (132), and a second dummy electrode (122b) spaced apart from the second internal electrode (122a), exposed to the fourth surface (4) and connected to the second external electrode (132),
wherein a size in the third direction of a portion of the first lead portion (121a-2) is smaller than a size in the third direction of the first main portion (121a-1), and a size in the third direction of a portion of the second lead portion (122a-2) is smaller than a size in the third direction of the second main portion (122a-1),
wherein the first dummy electrode (121b) does not overlap the second internal electrode (122a) in the first direction, and the second dummy electrode (122b) does not overlap the first internal electrode (121a) in the first direction, and
wherein at least a portion of the first dummy electrode (121b) overlaps the first internal electrode (121a) in the second direction, and at least a portion of the second dummy electrode (122b) overlaps the second internal electrode (122a) in the second direction.

2. The multilayer electronic component (100) of claim 1, wherein the first and second lead portions (121a-2, 122a-2) are disposed adjacently to one of the fifth and sixth surfaces (5, 6).

3. The multilayer electronic component of claim 1, wherein the first dummy electrode (121b) is disposed in one of two opposing sides of the first lead portion (121a-2) in the third direction, and
the second dummy electrode (122b) is disposed in one of two opposing sides of the second lead portion (122a-2) in the third direction.

4. The multilayer electronic component (100) of claim 1, wherein sizes in the third direction of exposed portions of the first and second lead portions (121a-2, 122a-2) are smaller than average sizes in the third direction of the first and second main portions (121a-1, 122a-1), respectively.

5. The multilayer electronic component (100) of claim 1, wherein at least a portion of each of distances at which the first and second internal electrode (121a, 122a) and the first and second dummy electrode (121b, 122b) are spaced apart from each other, respectively, is substantially constant.

6. The multilayer electronic component (300) of claim 1, wherein the first and second dummy electrodes (321b, 322b) are further exposed to one of the fifth and sixth surfaces (5, 6).

7. The multilayer electronic component (300) of claim 6, wherein the first external electrode (231) is disposed to cover exposed portions of the first dummy electrode (321b), and second external electrodes (332) is disposed to cover exposed portions of the second dummy electrode (322b), respectively.

8. The multilayer electronic component (200) of claim 1,
wherein the internal electrode layer (221, 222, 223, 224) further includes a third internal electrode layer (223) and a fourth internal electrode layer (224),
wherein the third internal electrode layer (223) includes a third internal electrode (223a) including a third main portion (223a-1) and a third lead portion (223a-2) extending from the third main portion (223a-1), exposed to the third surface (3) and connected to the first external electrode (231), and a third dummy electrode (223b) spaced apart from the third internal electrode (223a), exposed to the third surface (3), and connected to the first external electrode (231),
wherein the fourth internal electrode layer (224) includes a fourth internal electrode (224a) including a fourth main portion (224a-1) and a fourth lead portion (224a-2) extending from the fourth main portion (224a-1), exposed to the fourth surface (4) and connected to the second external electrode (232), and a fourth dummy electrode (224b) spaced apart from the fourth internal electrode (224a), exposed to the fourth surface (4) and connected to the second external electrode (232),
wherein a size in the third direction of a portion of the third lead portion (223a-2) is smaller than a size in the third direction of the third main portion (223a-1), and a size in the third direction of a portion of the fourth lead portion (224a-2) is smaller than a size in the third direction of the fourth main portion (224a-1),
wherein the third dummy electrode (223b) does not overlap the fourth internal electrode (224a) in the first direction, and the fourth dummy electrode (224b) does not overlap the third internal electrode (223a) in the first direction,
wherein at least a portion of the third dummy electrode (223b) overlaps the third internal electrode (223a) in the second direction, and at least a portion of the fourth dummy electrode (224b) overlaps the fourth internal electrode (224a) in the second direction, and
wherein the first lead portion (221a-2) is disposed closer to the fifth surface (5) than the third lead portion (223a-2), and the second lead portion (222a-2) is disposed closer to the fifth surface (5) than the fourth lead portion (224a-2) .

9. The multilayer electronic component (200) of claim 8,
wherein the first internal electrode layer (221) and the third internal electrode layer (223) are symmetrical in the third direction with respect to a second direction axis, and
wherein the second internal electrode layer (222) and the fourth internal electrode layer (224) are symmetrical in the third direction with respect to the second direction axis.

10. The multilayer electronic component (200) of claim 8, wherein the first to second lead portions (221a-2, 222a-2) are disposed adjacently to one of the fifth and sixth surfaces (5, 6).

11. The multilayer electronic component (200) of claim 8, wherein each of the first to fourth dummy electrodes (221b, 222b, 223b, 224b) is disposed in one of two opposing sides of a corresponding one of the first to fourth lead portions (221a-2, 222a-2, 223a-2, 224a-2) in the third direction.

12. The multilayer electronic component (200) of claim 8, wherein sizes in the third direction of exposed portions of the first to fourth lead portions (221a-2, 222a-2, 223a-2, 224a-2) are smaller than average sizes in the third direction of the first to fourth main portions (221a-1, 222a-1, 223a-1, 224a-1), respectively.

13. The multilayer electronic component (200) of claim 8, wherein at least a portion of distances at which the first to fourth internal electrodes (221a, 222a, 223a, 224a) and the first to fourth dummy electrodes (221b, 222b, 223b, 224b) are spaced apart from each other is substantially constant.

14. The multilayer electronic component (400) of claim 8, wherein the first to fourth dummy electrodes (421b, 422b, 423b, 424b) are further exposed to one of the fifth and sixth surfaces (5, 6).

15. The multilayer electronic component (400) of claim 14, wherein the first external electrode (431) is disposed to cover exposed portions of the first and third dummy electrodes (421b, 423b), and second external electrode (432) is disposed to cover exposed portions of the second and fourth dummy electrodes (422b, 424b).
